Europäisches Patentamt

European Patent Office

Office européen des brevets

(19)

(11) Veröffentlichungsnummer: **0 255 539**
**B1**

(12) **EUROPÄISCHE PATENTSCHRIFT**

(45) Veröffentlichungstag der Patentschrift: **11.04.90**

(51) Int. Cl.⁵: **B 60 C 15/036, B 60 B 21/10**

(21) Anmeldenummer: **87901035.3**

(22) Anmeldetag: **12.01.87**

(86) Internationale Anmeldenummer:
**PCT/EP87/00011**

(87) Internationale Veröffentlichungsnummer:
**WO 87/04395 30.07.87 Gazette 87/17**

(54) **RADREIFENEINHEIT UND VERFAHREN ZUR HERSTELLUNG DERSELBEN.**

(30) Priorität: **17.01.86 DE 3601316**

(43) Veröffentlichungstag der Anmeldung:
**10.02.88 Patentblatt 88/06**

(45) Bekanntmachung des Hinweises auf die
Patenterteilung:
**11.04.90 Patentblatt 90/15**

(84) Benannte Vertragsstaaten:
**DE FR GB IT NL SE**

(56) Entgegenhaltungen:
**DE-A-2 347 609**
**DE-A-3 206 171**
**DE-A-3 343 890**
**FR-A-1 234 567**
**FR-E- 81 585**
**GB-A- 405 790**
**GB-A-2 051 700**
**US-A-3 466 211**
**US-A-3 719 219**
**US-A-4 015 652**

(73) Patentinhaber: **DEBUS, Klaus**
**Am Schwarzen Moor 13**
**D-2070 Ahrensburg (DE)**

(72) Erfinder: **DEBUS, Klaus**
**Am Schwarzen Moor 13**
**D-2070 Ahrensburg (DE)**

(74) Vertreter: **Glawe, Delfs, Moll & Partner**
**Patentanwälte**
**Postfach 26 01 62 Liebherrstrasse 20**
**D-8000 München 26 (DE)**

EP 0 255 539 B1

Courier Press, Leamington Spa, England.

**Beschreibung**

Die Erfindung bezieht sich auf eine Radreifeneinheit bestehend aus einem eine Verstärkungseinlage enthaltenden, kernlosen Luftreifen und einer Felge, deren Ränder durch Klebung miteinander verbunden sind, wobei zusätzliche Mittel zur Sicherung der Verbindung vorgesehen sind. Die Erfindung betrifft ferner ein Herstellungsverfahren.

In der Praxis werden für Kraftfahrzeuge ausschließlich solche Räder verwendet, deren Reifen und Felge trennbare Elemente sind. Die im Meridionalschnitt in Umfangsrichtung des Reifens wirkenden Kräfte werden durch den im Wulst des Reifens angeordneten Kern aufgenommen, so daß sie nicht auf die Felge übertragen zu werden brauchen. Der Kern erschwert die Reifenherstellung. Ferner hat dieses System den Nachteil, daß die Felgenform im Hinblick auf den Reifensitz vorherbestimmt ist und keine Gestaltungsfreiheit für die Verfolgung anderer Zwecke, zum Beispiel der Notlauffähigkeit, verbleibt. Zwar wurden Räder entwickelt, bei denen der Sitz des lösbaren Reifens auf der Innenseite der Felge liegt (DE-A 32 21 012, DE-A 32 44 046, DE-A 32 46 131), so daß die Möglichkeit besteht, am Außenumfang der Felge eine Notlauffläche zu bilden; jedoch ist dieses System nicht weniger aufwendig als das in der Praxis übliche, wobei der Vorteil der größeren Gestaltungsfreiheit mit dem Nachteil schlechterer Seitenführungseigenschaften erkauft wird.

Eine geltungsgemäße Radreifeneinheit ist aus der DE-A 32 06 171 bekannt, welcher der Reifen ohne Wulstkern ausgeführt ist. Die im Meridionalschnitt in Umfangsrichtung im Reifen wirksamen Kräfte sowie die anderen Betriebskräfte werden am Reifenrand dadurch aufgenommen, daß dieser bleibend mit Felgenringen verklebt ist, die den Rand einer Felge bilden, wobei die Richtung der Klebeflächen im Meridionalschnitt geradlinig in der Richtung verläuft, in der die Reifenwand etwa vom Felgenrand abläuft. Dabei können auch Hinterschreidungen bildebde Ausnehmungen am Felgenring vorgeschen sein. Diese Richtungsgleichheit kann nur einem ganz bestimmten Belastungszustand vorhanden sein, der nur zufällig und kurzzeitig auftritt, während bei größerer Belastung die Reifenseitenwand über die Felgenkante geknickt wird bzw. bei kleinerer Belastung eine quer zur Klebefläche gerichtete Zugspannung auf die Klebung ausgeübt wird. Infolge der unsicheren Kräfteverhältnisse an der Klebung ist diese unsicher. Deshalb ist diese Radreifeneinheit so weiterentwickelt worden (DE-A 33 43 890), daß die Klebung lediglich zur Abdichtung dient, während die Kraftübertragung von der Reifenwand auf die Felge durch eine unmittelbare Verbindung zwischen der Verstärkungseinlage der Reifenwand und der Felge übertragen werden. Beispielsweise werden Karkassdrähte mit der Felge verschweißt. Dies ist sehr aufwendig und auch unsicher, weil die frei liegenden Drähte der Korrosion preisgegeben sind.

Es ist eine Radreifeneinheit bekannt (US-PS 4,274,465), in welcher der Reifen und die Felge fest miteinander verbunden sind. Die Felgenränder sind im Meridionalschnitt gabelig gespalten zur Bildung einer Nut, die den Reifenrand klemmend aufnimmt. Zwecks besserer Halterung in der Nut kann der Reifenrand einen Wulst mit Stahlkern aufweisen. Man kann sich nicht vorstellen, daß die Anordnung ohne einen solchen Wulst hinreichende mechanische Festigkeit erhalten kann. Der Herstellungsaufwand für den Reifen und die Felge ist keinesfalls geringer als der für das gebräuchliche System. Die Montage ist höchst aufwendig. Das Betriebsverhalten ist nachteilig, weil die Reifenwand in ihrem der Felge benachbarten Bereich einer ständigen scharfen Biegung unterworfen ist.

Eine weitere bekannte Radreifeneinheit (DE-PS 24 45 969, Fig. 18) wird dadurch hergestellt, daß zunächst eine Verstärkungseinlage mittels eines Haftmaterials am Felgenrand befestigt wird und anschließend das gießbare Reifenmaterial in einer Form, in die diese Teile eingelegt sind, angegossen wird. Die Felgenränder laufen im Meridionalschnitt spitz aus, wobei die Spitzen in einem mittleren Bereich des Formenhohlraums liegen, so daß die seitlich zur Spitze zulaufenden Flanken der Felge von dem flüssigen Reifenmaterial eingeschlossen werden, das dann daran haftend erstarrt. Die Kraftübertragung von der Felge auf den Reifen findet aber nicht im Bereich dieser Flankenverbindung statt, sondern durch die vorher gesondert herbeigeführte Verklebung der Verstärkungseinlage mit der Felge. Der im Schnitt spitz zulaufende Felgenrand weist im unbelasteten Zustand des Reifens etwa in die Richtung, in der die Reifenwand von der Verbindungszone abläuft. Wenn im Betrieb die Querschnittsform des Reifens ständig wechselt, kommt es zu örtlich hohen Spannungsspitzen, die zur Zerstörung des Reifenmaterials führen. - Dies mag der Grund dafür sein, warum in einer anderen Ausführungsform (Fig. 19 derselben Schrift) die Felge wesentlich schmaler als der Reifen und im Querschnitt nicht spitz ausgeführt ist. Jedoch werden dadurch einerseits ie Spannungsspitzen im Übergangsbereich nicht ausgeschlossen und wird andererseits die Seitenführungsfähigkeit des Reifens entscheidend herabgesetzt. - Ein großer Nachteil beider Ausführungsformen besteht darin, daß sie nur unter Verwendung gießbaren Werkstoffs hergestellt werden können, der aber in einer für Kraftfahrzeuge verwendbaren Qualität und Preiswürdigkeit bislang nicht zur Verfügung steht.

Die gleichen Nachteile wie die vorgenannten Ausführungen weisen diejenigen bekannten Systeme auf (US-A 3,466,211, US-A 3,719,219, GB-A 405 790), bei denen die Verstärkungseinlagen des Reifens mit Felgenteilen verklebt sind, die in derselben Richtung wie die Reifenseitenwände im unbelasteten Zustand in das Reifenmaterial eingebettet sind.

Die einer Klebeverbindung anhaftende Unsicherheit kann man dadurch vermeiden, daß man den Reifen einschließlich seiner Verstärkungseinlage im Querschnitt ringförmig geschlossen ausführt. Beispielsweise sind Radreifeneinheiten bekannt, (DE-A 23 47 609, GB-A 20 51 700), bei welchen der schlauchartig im Querschnitt ringförmig geschlossene Reifen auf ein Felgenbett aufgeklebt ist. Jedoch ist die Herstellung eines solchen Reifens aufwendig und ist die Befestigung am Felgenbett unsicher, weil die Klebung an dem bei Kurvenfahrt außen liegenden Felgenrand auf Zug quer zur Klebefläche belastet wird und sich daher lösen kann. Ferner ist bekannt, eine Verklebung dadurch sicherer zu machen, daß zusätzlich eine mechanische Verankerung vorgesehen wird durch Einklemmen der Reifenränder zwischen zwei Felgenteile (FR-A 12 34 567) und ggf. Verschweißung der metallenen Verstärkungseinlagen mit der Felge (FR-E 81585) wodurch aber die Herstellung wesentlich verteuert wird und die Zuverlässigkeit wegen Korrosion der freiliegenden Verstärkungseinlagen nicht verbessert wird. Geklebte Radreifeneinheiten haben sich daher aus vielen Gründen bislang nicht in die Praxis einführen lassen.

Der Erfindung liegt die Aufgabe zugrunde, eine Radreifeneinheit der eingangs genannten Art zu schaffen, die unter allen Belastungszuständen eine einwandfreie Kraftübertragung zwischen Reifen und Felge trotz ausschließlicher Klebeverbindung gestattet, die große Gestaltungsfreiheit für die Felge gibt, sich leicht beherrschbarer Fertigungstechnik bedient und die Verwendung herkömmlich vorbereiteter Reifenwerkstoffe und Reifenrohlinge gestattet.

Die erfindungsgemäße Lösung ist im Patentansprüche 1 angegeben.

Die Winkelangaben dieser Lösung bewirken, daß in keinem Fall, auch nicht bei stärkster Belastung und vorzugsweise auch nicht im Notlauf, Beanspruchungen auftreten können, die Zugspannungen quer zur Klebefläche verursachen und zu einem Abschälen des Reifenmaterials von der Felge oder auch nur zu einer und ungünstig aus Zug- und Scherspannungen zusammengesetzten Beanspruchung führen könnten. Im Gegenteil wird eine günstige zusammengesetzte Beanspruchung dadurch geschaffen, daß der Hauptbindezone auf der der Reifenwand abgewandten seite eine Hinterschneidung vorgeschaltet ist, in welcher der Reifenrand mit einer Ringversteifung liegt. Die Ringversteifung ist nicht im Sinne des zugfesten Kerns im Wulst herkömmlicher Reifen zu verstehen. Es ist nicht ihre Aufgabe, einen wesentlichen Teil der Spannungen selbst aufzunehmen und einen formschlüssigen Verbund zwischen den Rändern von Reifen und Felge herbeizuführen. Ihre Festigkeit und ihr Elastizitätsmodul sind daher in der Regel auch um mehrere Größenordnungen geringer als diejenigen der herkömmlichen Kerne. Sie können daher beispielsweise von einer etwas steifereren Gummisorte oder durch eine Häufung von Verstärkungsfäden in dem betroffenen Querschnittsbereich gebildet sein. Weitere Beispiele werden weiter unten erläutert. Ihre Aufgabe besteht darin, den Schubspannungen, die in der Klebezone zwischen der Felgenoberfläche und der Verstärkungseinlage des Reifens im Kleber und im Gummimaterial herrschen, normal zur Felgenoberfläche gerichtete Druckspannungen zu überlagern, die die Widerstandsfähigkeit des Materials gegenüber den Schubspannungen erhöhen.

Besonders zweckmäßig ist es, wenn die Felgenoberfläche im Bereich der Hauptbindezone bzw. der Hinterschneidung im Meridionalschnitt konvex gekrümmt ist, weil dann Kraftübertragungswirkungen hinzutreten, die man sich analog der Theorie der Umschlingungsreibung vorzustellen hat, derzufolge die übertragbare Kraft exponentiell mit dem Umschlingungswinkel zunimmt. Es wird dadurch auch der Vorteil erzielt, daß reifenfernere Bereiche der Hauptbindezone nicht gefährdet sind, falls die Klebung in einem reifennäheren Bereich sich lösen sollte. In diesem Zusammenhang kann es zweckmäßig sein, wenn der Krümmungsradius der Hauptbindezone von ihrer reifenseitigen Grenze her zunimmt.

Der Terminus Verklebung umfaßt im Sinne der Erfindung sämtliche schubfest haftenden Verbindungen zwischen dem Reifenmaterial und der Felgenoberfläche, unabhängig davon, ob ein drittes Verbindungsmaterial verwendet wird oder nicht. Es schließt insbesondere die durch Anvulkanisieren des Reifenmaterials an die Felgenoberfläche bewirkte Verbindung ein.

Unter einer Hinterschneidung ist ein solcher Oberflächenteil zu verstehen, der dem sich daraus in Axialrichtung lösenden Reifenrand eine Durchmesserveränderung aufzwingt. Bei einer Hinterschneidung, die auf der Achsseite der Felge, d.h., der der Achse zugewendeten Innenseite, angeordnet ist, vermindert sich der Durchmesser, wenn man zur Außenseite hin, d.h. von der Reifenmittelebene weg, wandert. Bei einer auf der Reifenseite, d.h. der der Achsseite entgegengesetzt liegenden Seite der Felge angeordneten Hinterschneidung vergrößert sich der Durchmesser in entsprechender Richtung.

Die Hauptbindezone enthält die Verklebung zwischen Felgenrand und Reifenrand vollständig oder zumindest zu einem sehr wesentlichen Teil.

Beim Größenvergleich der Winkel ist davon auszugehen, daß bei achsseitiger Anordnung der Bindezone an der Felge diejenigen Winkel positiv sind, deren von der Tangente gebildete Schenkel sich mit der Achse auf derjenigen Seite des betrachteten Punkts schneiden, die der Radmittelebene abgewandt ist. Umgekehrt sind bei einer reifenseitigen Anordnung der Bindezone diejenigen Winkel positiv, deren von der Tangente gebildete Schenkel sich mit der Achse auf derjenigen Seite des betrachteten Punkts schneiden, die der Radmittelebene zugewandt ist.

Sehr zweckmäßig kann es sein, außenseitig an die Bindezone anschließend eine konvex gekrümmte Stützfläche vorzusehen, wobei zweckmäßigerweise die Reifenseitenwand bei normaler Belastung an dieser Stützfläche gekrümmt anliegt. Dadurch wird erreicht, daß bei Änderung der Reifengestalt und folglich einer Änderung der Richtung, unter der die Reifenseitenwand von der Felge abläuft, die Stelle der Reifenseitenwand, an der diese eben noch auf der Stützfläche aufliegt und in der bei einer Formänderung die Walkung des Reifenmaterials stattfindet, nicht stets dieselbe bleibt, sondern über die Stützfläche hinwegwandert. Dadurch wird die Formänderungsbeanspruchung der Reifenseitenwand in diesem Bereich auf eine größere Fläche verteilt. Ein weiterer Vorteil besteht darin, daß stoßartige, in der Meridionalebene liegende Zugbeanspruchung der Reifenseitenwand durch die Umschlingungsreibung an dieser Fläche abgepuffert wird, bevor sie die auf diese Weise geschonte Bindezone erreicht. Zur Erzielung dieser Wirkung reicht eine einfache Abrundung einer Felgenkante, wie sie an sich bekannt sein mag, nicht aus. Vielmehr soll die aktive Strecke der Stützfläche, in der der Ablaufpunkt der Reifenseitenwand bei wechselnder Normalbelastung liegen kann, mindestens etwa in der Größenordnung der Dicke der Reifenseitenwand an dieser Stelle liegen.

Eine ähnliche Wirkung ergibt sich, wenn nach der Erfindung die Felge außenseitig benachbart der Bindezone eine von der Reifenseitenwand bei normaler Belastung entfernte Stützfläche aufweist, wobei zweckmäßigerweise der Zwischenraum zwischen der Stützfläche und der Reifenseitenwand elastisch gefüllt ist. Diese Maßnahme kann auch Vorteile bei der Fertigung haben, nämlich dann, wenn - wie unten näher ausgeführt - der Reifen bei der Beheizung dem Heizmedium direkt ausgesetzt wird und die Füllung zwischen Reifenseitenwand und Stützfläche als Abdichtung wirkt, die die Bindezone vor dem Heizmedium schützt.

Wenn der Hauptbindezone, wie beschrieben, eine sanft gekrümmte Stützfläche oder eine Stützfüllung vorgeschaltet ist, kann die Hauptbindezone im Meridionalschnitt gerade verlaufen.

Die oben erwähnte Ringaussteifung ist zweckmäßigerweise härter als das Reifenmaterial. Unbedingt erforderlich ist dies aber nicht, weil die Versteifungswirkung auch einfach auf einer Querschnittsverdickung beruhen kann. Sie kann auch aus mehreren Schichten abgestufter Härte zusammengesetzt sein. Zweckmäßigerweise weist sie eine Abdeckung durch eine Wärmedämm- und/oder Ableitschicht auf. Sie ist zweckmäßigerweise elastisch, um leichter montiert werden zu können. Sie kann - insbesondere dann, wenn die Bindezone auf der Reifenseite der Felge angeordnet ist - federnd ausgebildet sein, um vornehmlich während des Vulkanisationsprozesses durch Vorspannung eine hinreichende Anpressung in der Bindezone zu gewährleisten. In einer anderen Ausführungsform ist der Versteifungsring von einem beim Reifenaufbau bildsamen und erst danach aushärtenden Material gebildet, beispielsweise einer vulkanisierbaren Gummimischung oder einem Kunstharz. Dadurch vereinfacht sich der Reifenaufbau, weil nicht auf eine vorbestimmte Länge der Ringaussteifung Rücksicht genommen zu werden braucht. Während die vorerwähnten Ausführungen voraussetzen, daß das in der Hinterschneidung liegende Material infolge seiner größeren Härte oder Dicke die Versteifungswirkung (zumindest größtenteils) erbringt, kann bei einer weiteren Ausführung der Erfindung vorgesehen sein, daß nach der Reifenmontage und somit nach vollständiger oder teilweiser Füllung der Hinterschneidung ein zusätzlicher Versteifungsring eingesetzt wird, der das in der Hinterschneidung befindliche Material darin festhält. Vorteilhafterweise bilden dabei die die Hinterschneidung füllenden Teile des Reifenrands eine zur Achse gewendete, nicht hinterschnittene Oberfläche, die beispielsweise zylindrisch oder schwach konisch nach außen geöffnet ist und in die der Versteifungsring eingepreßt wird, wobei er mit dieser verklebt werden kann.

Zweckmäßigerweise ist die Ringaussteifung so steif, daß sie den Reifen auch dann an der Felge zu halten vermag, wenn die Klebung sich in der Bindezone vollständig gelöst haben sollte. Infolge der Krümmung der Bindezone sind die in einem solchen Fall von der Ringversteifung aufzunehmenden Kräfte wesentlich geringer als die in der Reifenwand wirkenden Kräfte. In vielen Fällen kann man sich jedoch mit einer geringeren Steifheit der Ringversteifung begnügen, weil eine vollständige Lösung der Klebung mit hinreichender Sicherheit ausgeschlossen werden kann.

Es ist im allgemeinen zweckmäßig, wenn die Bindezone jeweils nur auf einer Seite jedes Felgenrandes vorgesehen ist. Eine Bindung auf der anderen Seite, für die die oben gestellten Bedingungen dann im allgemeinen aber nicht eingehalten werden können, kann zusätzlich vorgesehen sein.

Nach einem weiteren Merkmal der Erfindung kann die Felge auf ihren dem Fahrzeug ab- bzw. zugewendeten Seiten unterschiedliche Durchmesser aufweisen, wobei der Durchmesser der Felge auf deren dem Fahrzeug abgewandten Seite zweckmäßigerweise kleiner ist. Die Reifenaußenseite wird nämlich im allgemeinen stärker beansprucht und ist auch Bordstein-Beschädigungen stärker ausgesetzt. Je kleiner der Felgendurchmesser hier ist, um so geringer ist auch die Beanspruchung und die Beschädigungsgefahr. Auch läßt sich dann mit geringerem Nachteil eine starke Außengummierung wählen. An der Innenseite, an der die Beanspruchung und die Schadensgefahren geringer sind, kann ein größerer Felgendurchmesser gewählt werden, um die Seitenführungsqualitäten zu verbessern. Durch die unterschiedliche Größe der Seitenwände wird die Lauffläche bei dieser Ausführung aus der Mittenlage nach außen gezogen, was zu einer sportlich breiten Abstützung des Fahrzeugs führt und die Überbeanspruchung der Außenschulter reduziert.

In diesem Zusammenhang kann es zweckmäßig sein, wenn die Bindezone an der dem Fahrzeug abgewandten Seite der Felge radial innen und an der anderen Seite radial außen angeordnet ist.

Die Erfindung setzt voraus, daß zwischen der Felgenoberfläche und der im Reifen enthaltenen, die Zugspannung vermittelnden Verstärkungseinlage (Cord) eine hinreichend feste Verbindung zustande kommt. In manchen Fällen kann man die Verstärkungseinlage nur unmittelbar mit der Felgenoberfläche verbinden. In der Regel wird es sich dabei aber um Aufbaucordbahnen handeln, die aus einer Vielzahl parallel nebeneinander angeordneter Cordfäden bestehen, die einzeln durch ein elastomeres Material, insbesondere den Reifenwerkstoff selbst, ummantelt und schichtförmig zusammengehalten sind. Die Elastomerummantelung hat eine Dicke von einigen Zehntel Millimetern, beispielsweise 0,5 mm. Die Kraftübertragung von der Felgenoberfläche auf die Verstärkungseinlage muß daher durch die Elastomerschicht hindurch übertragen werden, die dabei auf Schub beansprucht wird. Nach einem weiteren Merkmal der Erfindung kann die Kraftübertragung dadurch verbessert werden, daß die Oberfläche der Felge in der Bindezone in Laufrichtung der die Verstärkungseinlage bildenden Fäden (Cordfäden) geriffelt ist, wobei vorzugsweise die Mittenabstände der Riffelrillen denen der Cordfäden gleichen und die Cordfäden wenigstens größtenteils jeweils in einer Riffelrille liegen. Dadurch wird erreicht, daß für die Kraftübertragung zu jedem einzelnen Faden der Verstärkungseinlage eine größere felgenseitige Kraftübertragungsfläche in geringerem Abstand zur Verfügung gestellt wird, als dies bei glatter oder ungeordnet geriffelter Felgenoberfläche möglich wäre.

Ferner kann die Kraftübertragung (vor allem auch während des Ausheizens) dadurch verbessert werden, daß in der Bindezone ein Vulkanisationsmittelüberschuß bereitgestellt wird.

Ein Unterproblem der Erfindung besteht in der Gestaltung der Felge für den Pannenlauf. Dafür wird zweckmäßigerweise vorgesehen, daß die Felge zwischen den der Befestigung des Reifens dienenden Schultern ein Hochbett als Stützfläche für Pannenlauf aufweist, das zweckmäßigerweise, nicht aber notwendigerweise, eine durchgehende Einheit bildet. Wenn die Bindezone auf der Achsseite der Felge vorgesehen ist, können nach der Erfindung auch die Felgenränder zur Bildung einer Notlauf-Stützfläche herangezogen werden.

Bei der Herstellung bekannter felgenloser Reifen ist es möglich, die als Rohling vorgefertigten Aufbaubahnen im wesentlichen in ebener Gestalt der Aufbautrommel zuzuführen, woraus sich eine etwa zylindrische Anfangsgestalt des Rohlings auf der Aufbautrommel ergibt. Die Trommel ist mit Einrichtungen ausgerüstet, die die Bombierung des Reifenrohlings aus der zylindrischen Form heraus beim axialen Zusammenführen seiner Wulstränder gestatten. Solche Mittel sind nur schwer bei der Herstellung der erfindungsgemäßen Radreifeneinheit anwendbar, weil die Felge in die Aufbauvorrichtung einbezogen werden muß. In ihren die Notlaufflächen bildenden Bereichen hat sie einen größeren Durchmesser als in den für die Befestigung des Reifenrandes vorgesehenen Bereichen, so daß der Reifenrohling nicht zylindrisch mit dem kleinen Durchmesser seines zu befestigenden Randes aufgebracht werden kann, sondern in seinem Mittelteil einen größeren Durchmesser haben muß. Auch kann die Felge hinderlich sein für bombierende Mittel. Als Unterproblem der Erfindung stellt sich daher die Frage nach einem geeigneten Herstellungsverfahren. Dies ist nach der Erfindung dadurch gekennzeichnet, daß der Mittelteil der Aufbaucordbahnen vor dem Erreichen der Aufbautrommel in seiner Längsrichtung vorgedehnt wird, wobei zweckmäßigerweise die Ränder der Aufbaucordbahn während des Dehnens derart fest geführt werden, daß auch die Seitenwandteile anteilig vorgedehnt werden. Die Dehnung erfolgt über die elastische Grenze hinaus, so daß sie sich beim Erreichen der Aufbautrommel nicht wieder zurückbildet. Zweckmäßigerweise ist der Durchmesser der Reifenrandkante geringer als der Bindeflächendurchmesser, so daß der an der Reifenrandkante befindliche verdickte Ring bei Montage auf der Außenseite (Reifenseite) der Felge eine Vorspannung erhält bzw. bei Montage auf der Achsseite der Felge leicht durch die Teile geringeren Durchmessers die Felge hindurchgeführt werden und anschließend gespreizt werden kann.

Das erfindungsgemäße Verfahren erlaubt die Verwendung herkömmlicher Anlagen. Lediglich der Server für die Zuführung der vorgefertigten Karkasselage und die Aufbautrommel sind geändert. Die zugeführte Karkasselage besitzt zweckmäßigerweise komplett alle Aufbauelemente wie Schulterzwickel, Seitenwand, mehrfache Schutzlagen über die Bindezone, Randwulst zur Bildung der den Reifenrand in der Hinterschneidung haltenden Ringversteifung und/oder Kederstreifen zur elastischen Füllung des Zwischenraums zwischen der sich an die Bindezone außen anschließenden Stützfläche und der Reifenseitenwand. Die Vordehnung dieser Lage wird auf dem Server, in welchem die beiden Ränder zwischen Rollen oder zwischen über Rollen laufenden Bändern fixiert sind, vorgenommen. Dies kann dadurch geschehen, daß für den Mittelteil ein längerer Förderweg als für die Seitenränder vorgesehen wird, beispielsweise durch Förderrollen, die im randnahen Bereich einen geringeren Durchmesser als im Mittelbereich haben. Zweckmäßigerweise werden die Bindeflächen der Felge und/oder der Aufbaucordbahn vorgewärmt, so daß sich eine rasche Bindung und Abdichtung ergibt. Ferner kann vorgesehen sein, daß die Cordgummierung bei der Bindezone mit einem Vulkanisationsmittelüberschuß zur Anhebung ihrer Shorehärte versehen wird, um dadurch eine größere Bindefestigkeit und eine geringere Verformung unter der betrieblichen Beanspruchung zu erzielen. Der Vulkanisationsmittelüberschuß kann beispielsweise dadurch zugeführt werden, daß die auf der Aufbaucordbahn aufliegende Abdeckungsschicht oder ein daran angrenzender Randfixierungswulst, der zur Bildung der Ringversteifung dient, einen in die Cordgummierung eindringenden Vulkanisationsmittelüberschuß enthält.

Wenn eine ungeteilte Felge Verwendung findet, muß für die Bombierung in der Form auf den Bombierbalg verzichtet werden. Er kann durch einen in den Reifen vor der Verbindung mit der Felge eingebrachten Hilfsschlauch ersetzt werden. Beispielsweise ist es möglich, einen Hilfsschlauch mit hoher Dehnung vor dem Zusammenbau um die Felge zu legen, der zur Bombage aufgeblasen wird und im Reifen nach der Heizung verbleibt oder über die Öffnungen entfernt wird. Vorteilhafter ist jedoch die Direktbeaufschlagung des Reifens mit dem Bombier- und/oder Heizmedium. Zum Schutz des Reifenmaterials vor dem Heizmedium kann gewünschtenfalls auf die Reifeninnenfläche — vorzugsweise einschließlich des Keders — eine abdichtende Schicht eines mediumsresistenten Materials aufgebracht werden, beispielsweise aufgesprüht oder aufkalandriert werden. Während der Direktbeaufschlagung schützt der abdichtende Keder zwischen der Stützfläche und der Reifenwand die Bindezone vor dem Medium.

Damit die Bindezone sich nicht ungewollt lösen kann, kann es zweckmäßig sein, sie vor dem Einlegen des Reifens in die Form oder auch erst in der Form vor dem Zuführen des Mediums vorzuheizen, beispielsweise durch Mikrowellenstrahlung und/oder induktiv.

Eine gute Zirkulation des Heizmediums durch den Reifen kann erzielt werden, wenn zwei gegenüberliegende Löcher in der Felge für den Einsatz eines Automatik-Doppelanschlusses für Eintritt und Austritt des Heizmediums vorgesehen werden. Das Heizmedium kann von beliebiger Art sein, beispielsweise Heißwasser, Heißdampf, Gas (z.B. Stickstoff).

Da der Reifen von der Aufbautrommel ab fest mit der Felge verbunden ist, kann das gesamte Handling der Einheit durch Angriff an der Felge erfolgen. Dadurch werden unerwünschte Krafteinwirkungen auf den Reifenrohling vermieden. Auch nach der Vulkanisation ergibt die Halterung an der Felge beträchtliche Vorteile. Es können alle Arbeitsschritte von der Rohlingsfertigung über die Rohlings-TU-Prüfung mit Korrektur, Einsprühung, Vorheizung, Heizung, Ventileinsetzen, Gasfüllung, Auswuchten und TU-Prüfung und Korrektur, Innenausschäumung, Kontrolle (einschließlich Gasdichtheit), Stapelung und Versand bis hin zur Endmontage über die Halterung der Felge erfolgen. Dies fördert die Rationalisierungsmöglichkeiten bis hin zum vollautomatischen Produktionsprozeß. In kritischen Herstellungsabschnitten, in denen der Rohling einer ungewünschten Verformung ausgesetzt sein könnte, beispielsweise während des Transports und der Zwischenlagerung zwischen Reifenaufbaumaschinen und der Heizpressse, kann eine Drehung des Rades um eine im wesentlichen horizontale Achse vorgesehen sein.

Rundlauf- und Auswuchtfehler werden zweckmäßigerweise schon am Rohling korrigiert, da die feste Anordnung des Rohlings an der Felge dafür ausgezeichnete Voraussetzungen schafft.

Für die Heizung kann — wie an sich bekannt — eine vertikale Presse (mit horizontaler Radachse) verwendet werden, was eine kompakte Heizpressenanordnung und eine rasche Be- und Entladung ermöglicht.

Die Erfindung wird im folgenden näher unter Bezugnahmne auf die Zeichnung erläutert, die vorteilhafte Ausführungsbeispiele veranschaulicht. Darin zeigen:

Fig. 1 einen Meridionalschnitt durch eine Radreifeneinheit (halb)

Fig. 2 bis 7 vergrößerte Darstellungen des Verbindungsbereichs gemäß der linken Ausführung in Fig. 1 mit achsseitig gelegener Bindezone in verschiedenen Ausführungen und Funktionsstadien,

Fig. 8 eine vergrößerte, schematische Darstellung des rechts in Fig. 1 erscheinenden Verbindungsbereichs mit reifenseitig gelegener Bindezone,

Fig. 9 eine vergrößerte Querschnittsdarstellung des Verbindungsbereichs mit geriefelter Bindefläche der Felge

Fig. 10 einen Meridionalschnitt durch eine gegenüber Fig. 1 abgewandelte Radreifeneinheit (halb)

Fig. 11 einen Längsschnitt durch eine Aufbautrommel

Fig. 12 einen Querschnitt durch eine Karkasselage mit Aufbaukomponenten,

Fig. 13 einen Querschnitt durch den Server in dessen Annäherungsbereich an die Trommel,

Fig. 14 einen Längsschnitt durch den Server.

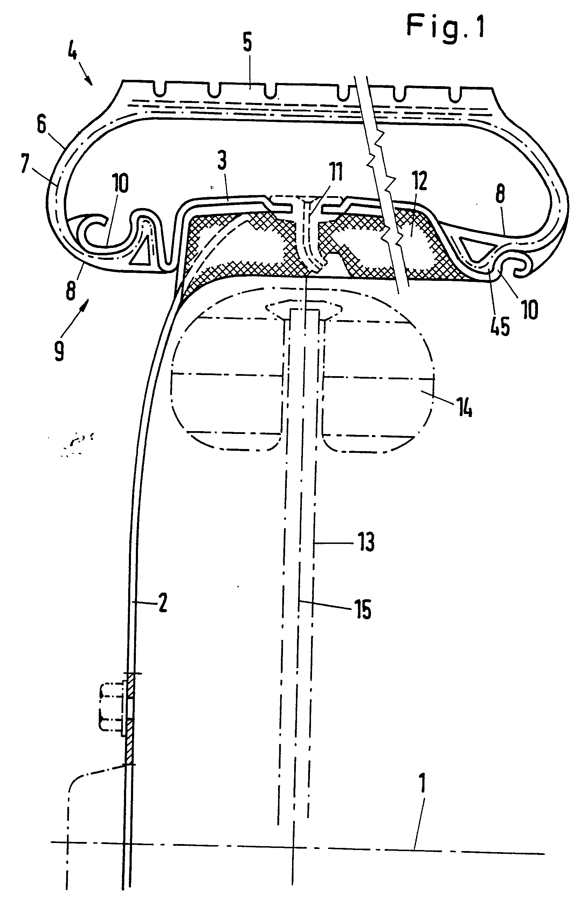

Die auf die Achse 1 bezogene Radreifeneinheit gemäß Fig. 1 besteht aus der Schüssel 2, die mit der Felge 3 verschweißt ist, die den Reifen 4 trägt, der als Radialreifen mit niedrigem Querschnitt dargestellt ist mit einem Laufstreifen 5 und einer Reifenseitenwand 6. Er enthält eine aus Cordfäden bestehende Verstärkungseinlage 7. Die Reifenränder 8 sind im Verbindungsbereich 9 mit dem Felgenrand 10 durch Klebung verbunden. Die Verbindung liegt in dem links in Fig. 1 dargestellten Ausführungsbeispiel auf der Achsseite des Felgenrandes, während sie in dem rechts dargestellten Ausführungsbeispiel auf der Reifenseite des Felgenrandes angeordnet ist. Die Felge enthält ein Ventil 11, das praktisch nicht benötigt wird, wenn das Rad als Langlauf-Reifensystem konzipiert ist, dessen Druckverlust durch Verwendung eines großmolekularen Füllgases wie $SF_6$ stark reduziert ist. Die Felge 3 ist bei 12 ausgeschäumt, damit sich im Felgenhohlraum keine Wasser- und Schmutzablagerungen bilden können sowie zur Verminderung des thermischen Einflusses der Bremsscheibe 13 und des Scheibenbremssatzes 14 auf die Felge, die ein mittleres Hochbett zur Ermöglichung eines zerstörungsfreien Notlaufs bildet.

In der Darstellung gemäß Fig. 1 ist vorausgesetzt, daß der Innenraum des belastungsfreien Reifens mit Druckgas gefüllt ist. Wird der Reifen durch eine Radialkraft in der Radebene 15 beaufschlagt, so wird der Laufstreifen näher an die Felge herangedrückt, was zu einer entsprechenden Verformung der Seitenwand führt.

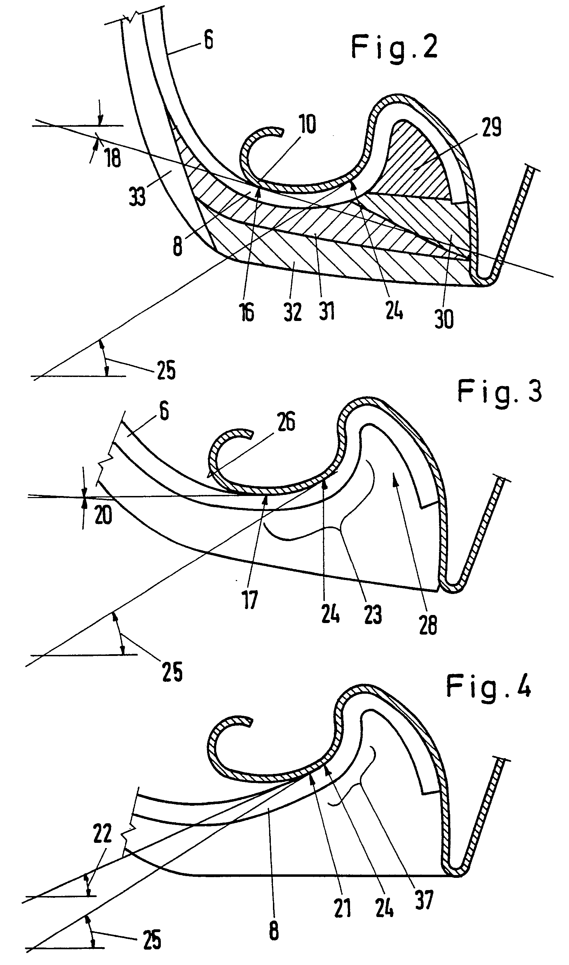

Extrem stark wird diese Verformung im Falle des Notlaufs, wenn die Felge auf der Innenseite des Laufstreifens aufliegt. Wie dies sich im Verbindungsbereich auswirkt, ist in den Fig. 2 bis 4 angedeutet, in denen Fig. 2 den belastungsfreien Zustand, Fig. 3 den belasteten Normalzustand und Fig. 4 den Notlaufzustand zeigt. Dabei ist vorausgesetzt, daß die Klebung zwischen der Reifenseitenwand 6 und dem Felgenrand 10 so angeordnet ist bzw. sich so weit gelöst hat, daß die Reifenseitenwand in allen diesen Belastungsfällen frei tangential vom Felgenrand ablaufen kann. Dies ist in der Praxis in der Regel nicht so; jedoch empfiehlt sich diese Betrachtungsweise deshalb, weil sie den schlechtestmöglichen Fall voraussetzt, wenn nach langdauernder Wechselbeanspruchung auf der Außenseite eine Lösung oder Beeinträchtigung der Klebebindung eingetreten ist. Dieser Fall liegt auch den Winkelangaben des Anspruchs 1 zugrunde.

Im unbelasteten Normalzustand gemäß Fig. 2 ist der Ablaufpunkt durch den Pfeil 16 bezeichnet. Die an die Felgenoberfläche in diesem punkt gelegte Tangente nähert sich nach rechts der Achse. Sie schneidet die Achse demzufolge auf der der Radmittelebene zugewandten Seite des Punkts 16. Der Winkel 18, den diese Tangente mit der Achse einschließt, ist daher nach der weiter oben gegebenen Definition negativ.

In dem sich gemäß Fig. 3 einstellenden Zustand, der durch maximale, jedoch noch als normal zu bezeichnende Belastung gekennzeichnet ist, wird der Ablaufpunkt 17 gegenüber dem Punkt 16 weiter nach rechts gerückt. Der zugehörige Winkel 20 ist klein positiv.

Im Notlauf gemäß Fig. 4 schließlich rückt der Ablaufpunkt 21 noch weiter nach rechts. Der zugehörige Winkel ist bei 22 dargestellt.

Mit einer außenseitig (das heißt in der Zeichnung links) von dem Ablaufpunkt 17 im belasteten Normalzustand befindlichen, in der Zeichnung nicht dargestellten Klebung kann bei der Kalkulation der Verbindungsfestigkeit nicht gerechnet werden. Deshalb soll sich auf der anderen Seite dieses Punktes 17 eine Zone 23 befinden, die einen wesentlichen Teil der Verbindungskräfte, vorzugsweise die gesamten Verbindungskräfte aufnehmen kann. Diese Zone wird als Hauptbindezone bezeichnet. Greift man in der Hauptbindezone 23 einen beliebigen Punkt 24 heraus, so ist dessen Tangentenwinkel 25 größer als der Tangentenwinkel 20 im Punkt 17 und als die zu sämtlichen dazwischen liegenden Punkten gehörigen Winkel. Dies hat zur Folge, daß das Material in der Hauptbindefläche 23 auf Schub beansprucht wird und keine Zugkräfte quer zur Bindefläche auftreten können, die unter ungünstigen Umständen zu einer Beeinträchtigung der Bindungsqualität führen könnten.

Die Oberfläche der Felge in der Hauptbindezone 23 ist konvex geformt. Dies hat zur Folge, daß die Kraftübertragung in diesem Bereich besonders intensiv ist.

In vielen Fällen reicht es aus, die Haupbindezone von dem Ablaufpunkt 17 bei maximaler, normaler Belastung zu bestimmen, nämlich dann, wenn nicht damit gerechnet werden muß, daß der Reifen nach einem Notlauffall, in welchem eine Lösung der Bindung rechts von dem Ablaufpunkt 17 auftreten könnte, noch weiter benutzt wird. Wenn damit jedoch gerechnet werden muß, ist es erforderlich, die Hauptbindezone im Bereich 37 rechts vom dem Ablaufpunkt 21 des Notlauffalles (Fig. 4) vorzusehen und so zu bemessen, daß er die erforderlichen Verbindungskräfte zu übertragen vermag.

Reifenseitig von dem Ablaufpunkt 16 bzw. 17 bzw. 21 bildet der Felgenrand 10 eine Stützfläche 26, an der sich die Reifenseitenwand 6 bei der wechselnden Beanspruchung und insbesondere auch unter dem Einfluß axial gerichteter Kräfte, wie sie bei Kurvenfahrt auftreten, abstützen kann. Diese Stützfläche 25 ist so gestaltet, daß sie der sich daran anlegenden Reifenseitenwand eine nur geringe Krümmung aufzwingt, so daß die Biege- und Walkbeanspruchung begrenzt bleibt und dennoch die Seitenführungskräfte, insbesondere die Lenkkräfte, sicher übertragen werden.

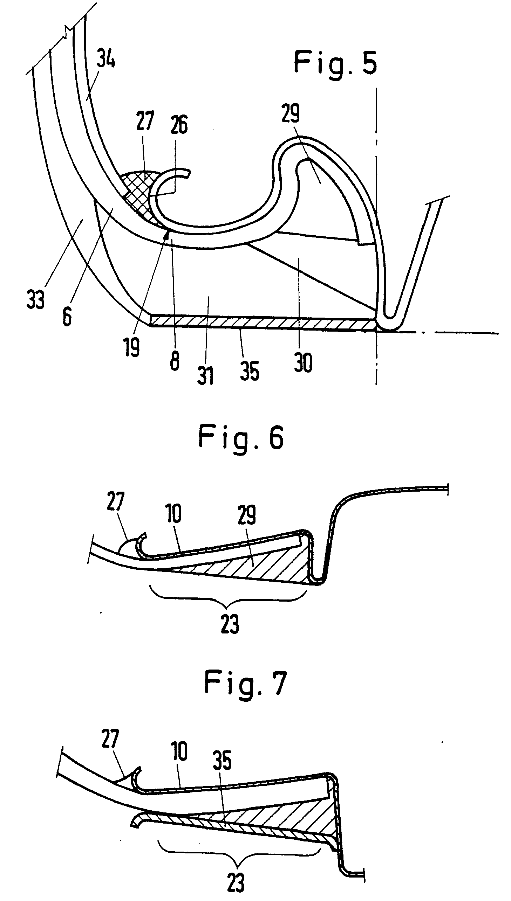

Auf eine Bindung zwischen Reifenseitenwand und Felge braucht in diesem Bereich nicht verzichtet zu werden. Zweckmäßigerweise wird sie so ausgeführt, wie dies in Fig. 5 angedeutet ist, nämlich durch einen zwischen der Reifenwand und der Stützfläche 25 eingepaßten Keder 27. Er bildet einen nachgiebigen Übergang von der festen Metallfläche zur flexiblen Reifenseitenwand und verbessert die Seitenführungseigenschaften des Reifens. Seine Weichheit wird dieser Funktion angepaßt. Er kann auch aus Zonen unterschiedlicher Härte bestehen, beispielsweise im Zwickelbereich aus härterem Material als an seiner dem Reifeninnenraum zugewandten Seite. Während des Bombierens und Heizens des Reifens bildet er eine Abdichtung zwischen der Felge und dem Reifen gegenüber dem Medium zum Schutz der Bindezone.

Auf der der Radmittelebene (rechts in Fig. 2 bis 4) zugewandten Seite läuft die Hauptbindezone 23 bzw. 25 in eine von der Felge gebildete Kehle 28 ein, die mit ihrem in Fig. 2 bis 4 linken Flächenteil an der Bildung der Hauptbindezone teilnimmt. Sie bildet in bezug auf eine achsparallele Richtung eine kräftige Hinterschneidung. In schwächerem Maße umfaßt die Hinterschneidung auch die gesamte Hauptbindezone, da sich deren Durchmesser von rechts nach links verringert. In die Kehle 28 ist ein ringförmiger Gummiteil 29 eingesetzt, der aus einer Haltemischung besteht und eine im Verhältnis zum Gummimaterial der Reifenseitenwand höhere Shorehärte besitzt. Er dient dazu, den Reifenrand in der Kehle 28 zu halten und die Bindung in der Hauptbindezone 23 bzw. 25 abzustützen und bewirkt auch eine Nothalterung, falls die Bindung in dem Streifen 23, 25 beschädigt worden sein sollte.

Der Füllgummistreifen 30 besteht aus einer weichen Mischung und hat eine toleranzausgleichende Aufgabe. Der Streifen 31 unterstützt die Übergabefunktion des Keders 27 von der anderen Seite durch eine steifere Mischung, während der Streifen 32 diese Zone vor Hitzeeinwirkungen schützt, wenn die Bindezone auf der der Achse zugewandten Seite der Felge liegt. Es schließt sich die Seitenwandgummierung 33 an. Die der Achse zugewendete Oberinnenfläche der Schicht 32 öffnet sich zweckmäßigerweise schwach konisch nach außen, um das Ein- und Ausformen beim Vulkanisationsprozeß zu erleichtern. Die Innengummierung 34 (Fig. 6) endet mit einem Toleranzabstand vor der Hauptbindezone innerhalb des durch den Keder 27 abgedeckten Bereichs 18. Der Schichtenaufbau über der Bindezone gleicht im Ausführungsbeispiel gemäß Fig. 5 im wesentlichen dem gemäß Fig. 2. Statt der hitzebeständigen Schicht 32 ist ein bandförmiger Metallring 35 vorgesehen, der neben der Wärmeableitung die Festigkeit des die Hinterschneidung füllenden Teils des Reifenrandes verbessert. Im dargestellten Beispiel öffnet er sich ebenfalls schwach konisch nach außen. Er kann aber auch anders geformt sein.

In den Alternativausführungen gemäß Fig. 6 und 7 wird die Hinterschneidung ohne Kehle 28 ausschließlich durch entsprechende Neigung der Hauptbindezone 23 erzeugt, deren Durchmesser von innen nach außen (von rechts nach links) abnimmt. Gemäß Fig. 6 ist der Reifenrand in der Hinterschneidung durch die härter eingestellte Gummischicht 29 versteift. Wenn in der Hauptbindezone eine Schubverformung wirksam wird, verschiebt sich die Ringversteifung 29 in Richtung geringerer Durchmesser, wird dadurch in Umfangsrichtung unter Kompression gesetzt und erzeugt so eine radial nach außen wirkende Kraft, deren normal zur Bindezone verlaufende Komponente die Bindung verstärkt und abstützt.

Die Ausführung gemäß Fig. 7 gleicht derjenigen gemäß Fig. 6 mit dem Unterschied, daß das die Hinterschneidung füllende Material des Reifenrands achsseitig abgedeckt ist durch einen Metallring 35, der dieses Material ringförmig versteift.

Bei diesen Ausführungsformen gemäß Fig. 6 und 7 verläuft die Hauptbindezone im Meridionalschnitt gerade. Sie kann statt dessen auch konvex (von der Achsseite her gesehen) gekrümmt sein, um eine noch sicherere Haltewirkung zu ergeben.

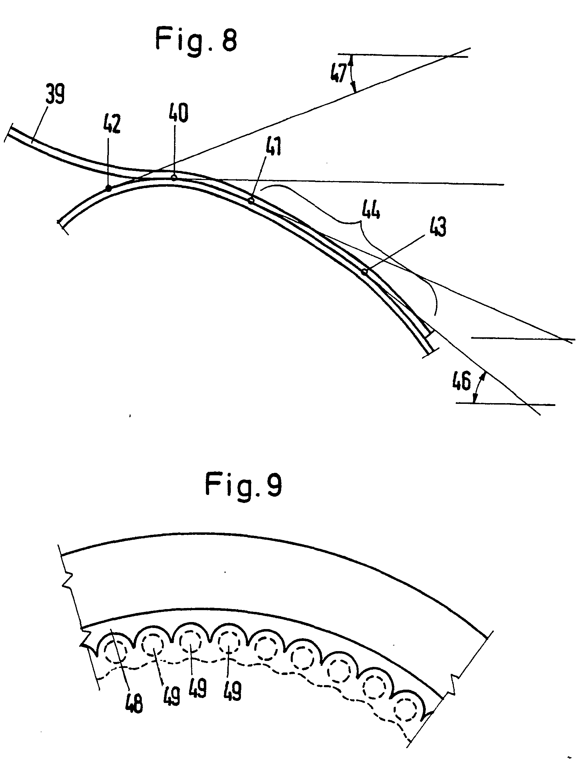

Die obigen Erläuterungen zu der Ausführung mit achsseitig vom Felgenrand gelegener Verbindung (links in Fig. 1) lassen sich, soweit im folgenden nichts anderes gesagt ist, auch auf die reifenseitige Anordnung der Verbindung (rechts in Fig. 1) anwenden. Die maßgeblichen Winkelverhältnisse gehen aus Fig. 8 hervor.

Vom Felgenrand 38 läuft die Reifenseitenwand 39 nach außen im Ablaufpunkt 40 ab, wenn der Reifen entsprechend der normalen Maximalbelastung verformt ist. Im unbelasteten Zustand bzw. im Notlaufzustand liegen die Ablaufpunkte bei 41 bzw. 42. An dem Ablaufpunkt 41 schließt sich rechts die Hauptbindezone 44 und danach die Felgenkehle 45 (Fig. 1) an. Betrachtet man einen beliebigen Punkt 43 innerhalb der Hauptbindezone 44, so stellt man fest, daß dessen Tangente mit der Achsrichtung einen Winkel 46 bildet, der größer ist als die zu den Ablaufpunkten 41 bzw. 40 gehörigen Winkel und erst recht als der zum Ablaufpunkt 42 gehörige, negative Winkel 47.

Wichtig ist, daß in der Hauptbindezone 23 bzw. 44 eine hinreichende Schubverbindung zwischen der Felgenoberfläche und der Verstärkungseinlage 7 des Reifenrandes zustande kommt. Diese kann durch Riefelung der felgenseitigen Bindefläche gefördert werden, und zwar vorzugsweise in der Gestalt gemäß Fig. 9, bei der je eine Riefelungsnut 48 einem Cordfaden 49 so zugeordnet ist, daß der Cordfaden von der Oberfläche der Nut teilweise umfangen ist. Die Zahl und die Lage der Riefelungsnuten stimmt überein mit derjenigen der Cordfäden. Selbstverständlich können die Übergänge der Riefelungsnuten abgerundet sein.

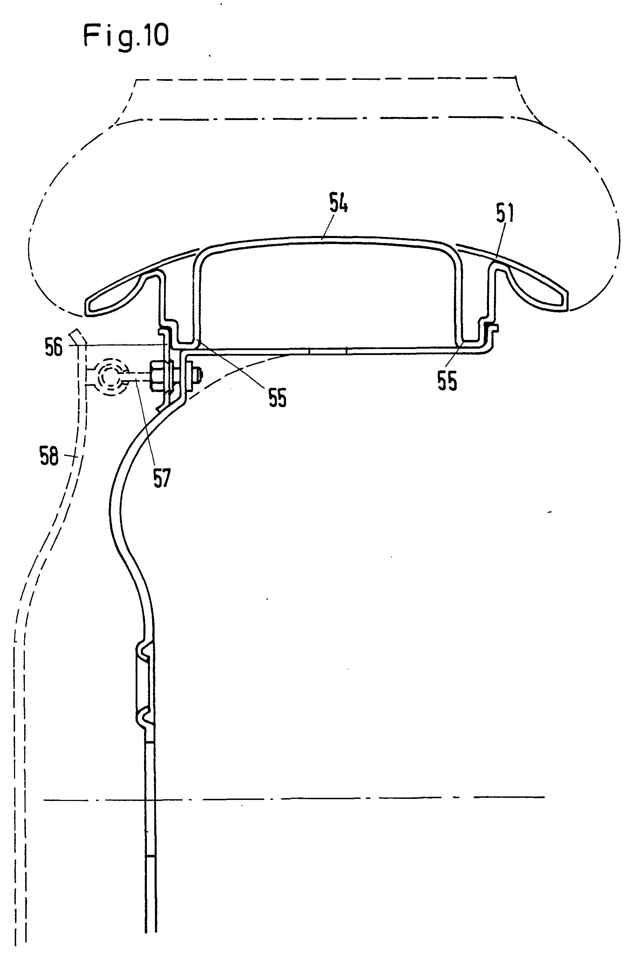

Fig. 10 zeigt ein Beispiel einer Radreifeneinheit mit von der Randschüssel 2 abnehmbarer Felge, die dank zylindrischer Sitzflächen richtungsneutral ist, d.h. sie kann links und rechts montiert werden, beispielsweise im Hinblick auf eine Laufrichtungsbindung des Reifens. Die Felge zeigt ein breites Notlaufmittenhochbett 54 und zwei Schultertiefbette, die gleichfalls für den Notlauf sowie für die Abstützung des Reifens in Fällen besonderer Beanspruchung, beispielsweise beim Überfahren eines Bordsteins, bestimmt sind. Die Sitzflächen 55 der Felge und der Schüssel sind mit einer übereinstimmenden Riefelung versehen, so daß ein undrehbarer Sitz erreicht wird. Das Befestigungsteil 56 kann ein Ring sein oder auch von einzelnen Pratzen gebildet werden, die mittels Schrauben 57 montiert werden. An der Halterung 57 kann eine Radkappe 58 angebracht werden. Die Schüssel 2 kann von der Nabe abnehmbar oder vorzugsweise mit dieser bleibend verbunden sein.

Wie bei bekannten Reifen erfolgt der Aufbau zweckmäßigerweise auf einer Aufbautrommel, auf der während der Bombierung die Reifenränder axial zusammengeführt werden.

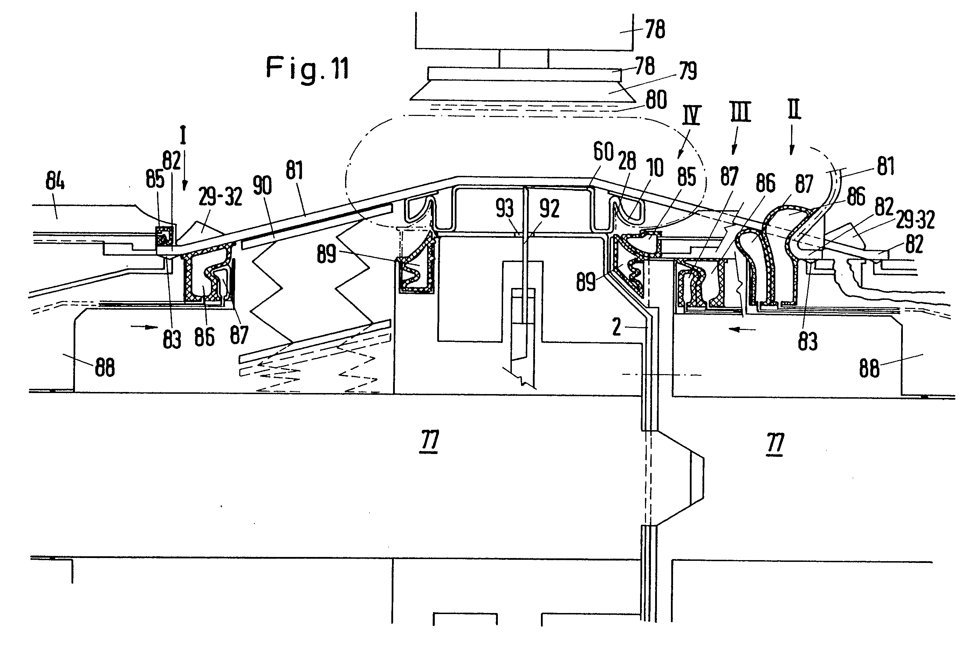

Dabei ist es zweckmäßig, die Felge, mit der die Reifenränder verbunden werden müssen, in die Aufbautrommel aufzunehmen, weil anderenfalls die Felge erst nachträglich in den bereits ringförmig geschlossenen Reifenrohling eingeführt werden müßte, was wegen der dafür notwendigen Aufweitung und anschließenden Wiederverengung eines Reifenrandes auf Schwierigkeiten stoßen könnte. Fig. 11 zeigt schematisch eine Aufbautrommel mit darin aufgenommener Felge 60, die auch schon mit der zugehörigen Schüssel verbunden ist.

Die Ränder des Reifenrohlings sollen einen Durchmesser haben, der nicht größer ist als der Durchmesser des Felgenrandes, mit dem sie zu verbinden sind. Da aber die Felge in anderen Bereichen einen größeren Durchmesser haben muß, folgt daraus, daß der Reifenrohling auf die Aufbautrommel in einer Form aufgebracht werden muß, die sich durch einen größeren Durchmesser im mittleren Bereich des Reifenrohlings als an seinen Rändern auszeichnet.

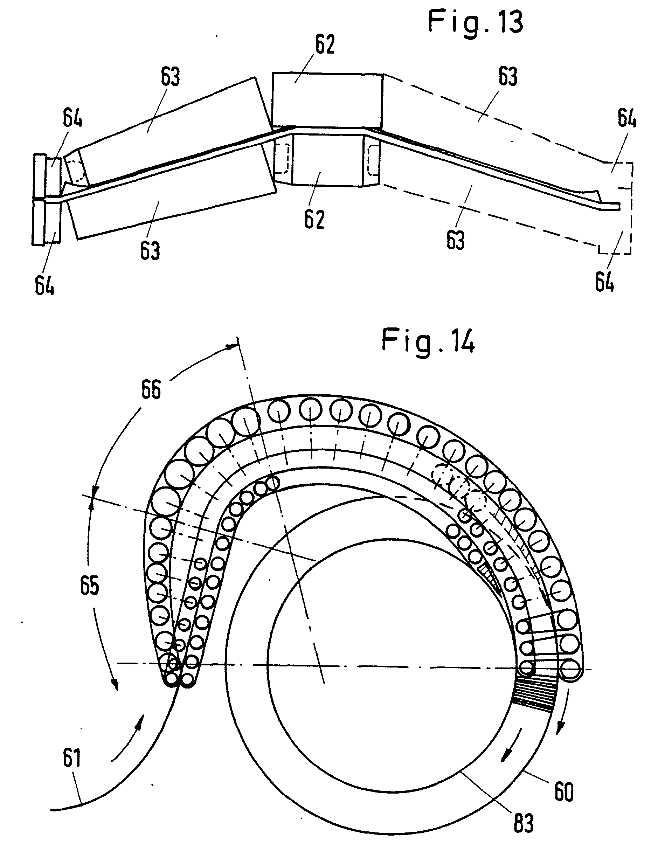

Um dies zu ermöglichen, ist der in Fig. 13 und 14 veranschaulichte, erfindungsgemäße Server vorgesehen. Dieser besteht aus einer unteren und einer oberen Rollenbahn, die zwischen sich die Reifenaufbaubahn 61 führen und formen. Jedes Glied jeder der beiden Rollenbahnen besteht aus mehreren Rollen, nämlich einer mittleren Rolle 62, zwei Seitenrollen 63 und zwei Randrollen 64. Jede der beiden Rollenbahnen kann gewünschtenfalls auch noch von Förderbändern umlaufen sein. Die Rollen sind im Querschnitt gemäß Fig. 13 so angeordnet, daß die zwischen ihnen bzw. den Förderbändern geführte Aufbaubahn 61 im Querschnitt gewölbt verformt wird.

Da der Server außerdem eine in Längsrichtung gekrümmte Gestalt (Fig. 14) aufweist, führt diese Wölbung gleichzeitig zu einer Dehnung des Mittelteils gegenüber den Bahnrändern, die ungedehnt zwischen den Randrollen 64 geführt sind. Während die Aufbaubahn in einem ersten Abschnitt 65 des Servers im wesentlichen geradlinig geführt ist und lediglich in Querrichtung gewölbt wird, durchläuft sie in dem folgenden Abschnitt 66 eine stark gekrümmte Strecke, in der die gewünschte Mitteldehnung erfolgt. Der Krümmungsradius in der Strecke 66 ist kleiner als der Radius der Aufbautrommel. Es findet somit eine Überdehnung statt, die in der anschließenden Strecke des Servers, die wieder einen größeren Krümmungsradius hat, durch elastische Rückverformung teilweise wieder aufgehoben wird. Jedoch bleibt infolge der Überdehnung in der Strecke 66 eine bleibende Verformung, die es ermöglicht, die Bahn der Aufbautrommel in der in Fig. 11 vorausgesetzten Form zuzuführen. Es sei in diesem Zusammenhang vermerkt, daß die dargestellte Anordnung voraussetzt, daß die Verstärkungseinlage der Aufbaubahn aus quer (später radial) verlaufenden Cordfäden besteht, deren Abstand ohne Dehnung der Fäden selbst durch die im Server vorgenommene Dehnung vergrößert werden kann. Es versteht sich, daß die Aufbautrommel und der Server synchron angetrieben sind und ggf. eine kleine Vorspannung der Aufbaubahn auf der Trommel dadurch erzielt werden kann, daß die Trommel geringfügig schneller als der Server angetrieben wird.

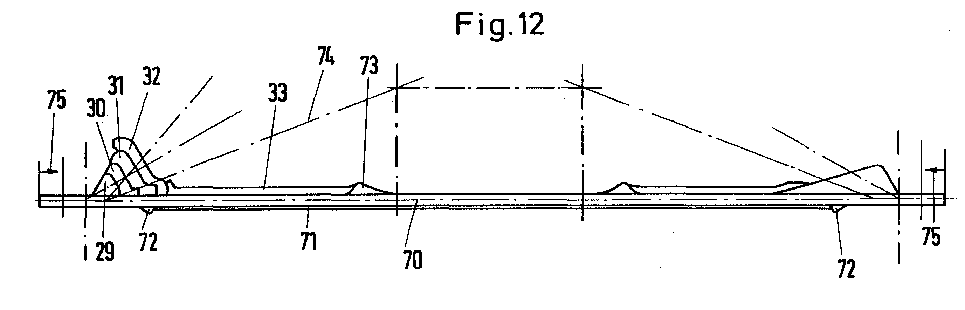

In Fig. 12 ist eine vorgefertigte Karkasselage im Querschnitt dargestellt. Unter der Cordbahn 70 befindet sich eine innere Deckschicht (Innenliner) 71 z.B. aus Butylkautschuk, die an den Seiten durch Profile 72 begrenzt ist, die später den Keder 27 bilden. Auf der Oberseite sind die Füllgummi 29-32 (links) aufgebracht, die an die Seitenwandmischung 33 angrenzen, die zur Mitte hin bei den Zwickeln 73 endet. Die strichpunktierte Linie 74 zeigt das Profil, mit dem die in der Mitte gedehnte Aufbaubahn aus dem Server ausläuft, während die Pfeile 75 die mit der Profilierung verbundene seitliche Verkürzung andeuten.

Im folgenden wird unter Bezugnahme auf Fig. 11 der Aufbauvorgang einschließlich der dafür erforderlichen Einrichtungen erläutert. Die Hauptwelle 77 der Einstufen-Aufbaumaschine ist im Bereich der Radschüssel 2 trennbar und fixiert und zentriert hier das Rad. Über der Mittellinie der Felge hält der Transferring 78 den Laufstreifen 79 und den Gürtel 80. Die gemäß Fig.

12 vorprofilierte Aufbaubahn 81 liegt mit ihren Rändern 82 im Trommelbereich einer Vakuum-Ansaugung 83. Die Ränder werden zusätzlich mittels des Pusher-Rings 84 und des Blähwulst 85 festgehalten. Beide finden sich zusammen mit dem Push-Over-Balg 86, 87 auf dem verschiebbaren Trommelteil 88. Zwischen diesem und dem Schulterpreßbalg 89 befindet sich ein Trommelsegment 90, welches insbesondere die Erzeugung eines stumpfen Stoßes der Aufbaubahn 14 ermöglicht und nach innen zusammenklappbar ist. Diese Teile sind in ihrer Anfangslage im Bereich I links in Fig. 11 dargestellt.

Die zweite Phase des Verfahrens ist in dem Bereich II rechts in Fig. 11 angedeutet. Der Trommelteil 88 ist um eine Strecke zur Mitte gefahren, wobei die Push-Over-Bälge 86 und 87 die Aufbaubahn 81 mit dem Füllgummiwulst 29-32 über dessen Spitze um ca. 120° umschlagen. In der letzten Phase dieses Umschlages, wenn ein Umschlagwinkel von etwa 90° erreicht ist, fährt der Pusher-Ring 84 zurück, um nach vollendetem Umschlag gegen die ihm nun zugewendete Seite des Füllgummis 29-32 zu drücken.

Nun fährt der Trommelteil 88 in die Pos. III, wobei die Bälge 86, 87 zur Bildung einer zylindrischen Führungsfläche zusammengezogen werden.

Bei weiterer Verschiebung des Pusher-Rings 84 zur Mitte hin wird der Rand 82 des Reifenrohlings über diese Führungsfläche hinweggeschoben. Wenn er die Schräge des Schulter-Preß-Balges 89 erreicht hat, wird er nach außen in die endgültige Lage in die Kehle 28 der Felge und gegen die Bindefläche des Felgenrandes 10 gedrückt. Der Blähwulst 85 fördert dies durch eine entsprechende Schwenkbewegung (Pos. IV).

Danach fährt der Pusher-Ring 84 zurück, und der Schulter-Preß-Balg 89 drückt mit erhöhter Kraft den Füllgummi 29-32 mit der Cordbahn 81 so fest, daß nun der erhöhte Innendruck des Reifens die Cordbahn 81 in der Zone des Gürtels 80 mit diesem verbindet. Die Preßluft wird dem Reifenraum dabei über die Doppelzuführung 92, 93 zugeführt. Die Zuführung 92 kann ein- und ausgefahren werden. Der Rad-Reifen-Rohling ist damit fertig und kann entnommen und weitertransportiert werden.

## Patentansprüche

1. Radreifeneinheit, bestehend aus einem eine Verstärkungseinlage enthaltenden Luftreifen (4) ohne Wulstkern und einer Felge (3), wobei die Ränder (8, 10) des Reifens (4) und der Felge (3) ausschließlich durch Klebung miteinander verbunden und zusätzliche Mittel zur Sicherung der Verbindung vorgesehen sind, die einerseits von einer Hinterschneidung (28) des Felgenrandes (10) und andererseits von einer damit zusammenwirkenden Ringversteifung (29) des Reifenrands (8) gebildet sind und wobei die Klebung eine Hauptbindezone (23, 37) umfaßt, die zumindest im Bereich der Hinterschneidung (28) vorgesehen ist, dadurch gekennzeichnet, daß in der Hauptbindezone (23, 37), die im Meridionalschnitt konvex gekrümmt ist, in jedem Punkt (24) der Tangentenwinkel (25) mit der Radachse (1) größer ist als in jedem der Reifenseitenwand (6) näher liegenden Punkt und auch größer ist als der Winkel (20) unter dem die Reifenseitenwand (6) unter allen normalen Lastzuständen frei von der einteiligen Felge (3) abläuft, so daß ausschließlich positive Normalkräfte in der Hauptbindezone von dem Reifenrand auf den Felgenrand übertragen werden.

2. Radreifeneinheit nach Anspruch 1, dadurch gekennzeichnet, daß der Reifenrand (8) ausschließlich auf der der Achse (1) zugewendeten Seite des Felgenrands (10) angeordnet ist.

3. Radreifeneinheit nach Ansprüch 1 oder 2, dadurch gekennzeichnet, daß der genannte Tangentenwinkel Winkel (25) nicht kleiner ist als der Winkel (22), unter dem die Reifenseitenwand (6) bei Notlauf von der Felge (3) frei abläuft.

4. Radreifeneinheit nach einem der Ansprüche 1 bis 3, dadurch gekennzeichnet daß sich die Hauptbindezone (23) zusätzlich in den Zur Reifenseitenand hin daran enschließenden Bereich erstreckt.

5. Radreifeneinheit nach einem der Ansprüche 1 bis 4, dadurch gekennzeichnet, daß an dem Felgenrand (10) außenseitig von der Hauptbindezone (23) eine konvex gekrümmte bei normaler Belastung von der Reifenseitenwand entfernte Stützfläche (26) vorgesehen ist.

6. Radreifeneinheit nach Ansprüch 5, dadurh gekennzeichnet, daß der Zwischenraum zwischen der Stützfläche (26) und der Reifenseitenwand (6) mit einem elastischen werkstoff (27) ist.

7. Radreifeneinheit nach Anspruch 1, dadurch gekennzeichnet, daß die Ringversteifung (29) ein beim Reifenaufbau bildsames und danach erhärtendes Material umfaßt.

8. Radreifeneinheit nach Anspruch 1 oder 7, dadurch gekennzeichnet, daß die Ringversteifung (29) einen nach der Reifenmontage einfügbaren Versteifungsring (35) umfaßt.

9. Radreifeneinheit nach Anspruch 8, dadurch gekennzeichnet, daß der die Hinterschneidung (28) füllende Teil des Reifenrands (8) eine zur Achse gewendete, nicht hinterschnittene Oberfläche bildet und der Versteifungsring (35) auf dieser aufliegt.

10. Radreifeneinheit nach einem der Ansprüche 1 bis 9, dadurch gekennzeichnet, daß die Felge auf ihren dem Fahrzeug ab- bzw. zugewendeten Seiten unterschiedlichen Durchmesser aufweist.

11. Radreifeneinheit nach einem der Ansprüche 1 bis 10, dadurch gekennzeichnet, daß die Oberfläche der Felge in der Hauptbindezone (23) in Laufrichtung der Verstärkungseinlage bildenden Cordfäden (49) des mit ihr verbundenen Reifenrandes (8) geriffelt ist und die Mittenabstände und die Richtung der Riffelrillen (48) denen der Cordfäden gleichen und eine wesentliche Zahl von Cordfäden in Riffelrillen liegt.

12. Radreifeneinheit nach einem der Ansprüche 1 bis 11, dadurch gekennzeichnet, daß wenigstens eine Felgenschulter mit einer Stützfläche (51) für Pannenlauf ausgerüstet ist.

13. Verfahren zum Herstellen einer Radreifeneinheit nach einem der Ansprüche 1 bis 12, bei dem vorgefertigte Aufbaubahnen des Reifens einer Aufbautrommel zugeführt und auf dieser unter axialer Annäherung ihrer Ränder bombiert werden, dadurch gekennzeichnet, daß der Mittelteil der Aufbaubahnen vor dem Erreichen der Aufbautrommel in seiner Längsrichtung vorgedehnt wird.

14. Verfahren nach Anspruch 13, dadurch gekennzeichnet, daß die Cordgummierung bei der Hauptbindezone mit einem Mittel zur Anhebung ihrer Shorehärte in Verbindung gebracht wird.

15. Verfahren nach Anspruch 13 oder 14, dadurch gekennzeichnet, daß die Radreifeneinheit für die Bombierung und/oder Heizung direkt mit dem jeweiligen Heiz-Medium beaufschlagt wird.

16. Verfahren nach Anspruch 13 oder 14, dadurch gekennzeichnet, daß für indirekte Herz-Mediumsbeaufschlagung ein dünner Hilfsschlauch vorgesehen wird.

17. Verfahren nach einem der Ansprüche 13 bis 16, dadurch gekennzeichnet, daß die Hauptbindezone vorgeheizt wird.

18. Verfahren nach einem der Ansprüche 13 bis 17, dadurch gekennzeichnet, daß Rundlauf-, Massen- und/oder Auswuchtfehler am Rohling korrigiert werden.

**Revendications**

1. Ensemble roue-pneumatique, se composant d'une enveloppe pneumatique (4) sans tringle de talon, contenant une garniture intérieure de renfort, et d'une jante (3), les bords (8, 10) du pneu (4) et de la jante (3) étant unis l'un à l'autre exclusivement par collage et des moyens supplémentaires étant prévus pour la sécurité de cette union, moyens qui sont constitués d'une part par une contre-dépouille (28) du bord (10) de la jante et, d'autre part, par un renfort annulaire (29) du bord (8) du pneu coopérant avec cette contre-dépouille, et le collage comprenant une zone d'union pinciple (23, 37) qui est prévue au moins dans la région de la contre-dépouille (28), caractérisé en ce qu'en tout point (24) de la zone d'union principale (23, 37), qui présente une courbure convexe en coupe méridienne, l'angle (25) de la tangente avec l'axe (1) de la roue est plus grand qu'en tout point situé plus près du flanc (6) du pneu, et est aussi plus grand que l'angle (20) sous lequel le flanc (6) du pneu s'écarte librement de la jante formée d'une seule pièce (3) dans toutes les conditions normales de charge, de telle sorte que dans la zone d'union principale, il soit exclusivement transmis des forces normales positives entre le bord du pneu et le bord de la jante.

2. Ensemble roue-pneumatique selon la revendication 1, caractérisé en ce que le bord (8) du pneu est disposé exclusivement du côté du bord (10) de la jante qui est dirigé vers l'axe (1).

3. Ensemble roue-pneumatique selon la revendication 1 ou 2, caractérisé en ce que ledit angle de la tangente (25) n'est pas plus petit que l'angle (22) sous lequel le flanc (6) du pneu s'écarte librement de la jante (3) dans des conditions de roulement exceptionnelles en cas d'urgence.

4. Ensemble roue-pneumatique selon l'une quelconque des revendications 1 à 3, caractérisé en ce que la zone d'union principale (23) s'étend en plus dans la région qui lui fait suite en direction du flanc du pneu.

5. Ensemble roue-pneumatique selon l'une quelconque des revendications 1 à 4, caractérisé en ce qu'il est prévu sur le bord (10) de la jante, du côté extérieur de la zone d'union principale (23), une surface d'appui (26) présentant une courbure convexe, qui est éloignée du flanc du pneu dans des conditions de charge normales.

6. Ensemble roue-pneumatique selon la revendication 5, caractérisé en ce que l'intervalle entre la surface d'appui (26) et le flanc (6) du pneu est rempli d'une matière élastique (27).

7. Ensemble roue-pneumatique selon la revendication 1, caractérisé en ce que le renfort annulaire (26) comprend un matériau qui se laisse former facilement lors de la confection du pneu et qui durcit ensuite.

8. Ensemble roue-pneumatique selon la revendication 1 ou 7, caractérisé en ce que le renfort annulaire (29) comprend un anneau de renfort (35) qui peut être inséré après le montage du pneu.

9. Ensemble roue-pneumatique selon la revendication 8, caractérisé en ce que la partie du bord (8) du pneu qui remplit la contre-dépouille (28) forme une surface non contre-dépouillée dirigée vers l'axe, et en ce que l'anneau de renfort (35) s'applique sur cette surface.

10. Ensemble roue-pneumatique selon l'une quelconque des revendications 1 à 9, caractérisé en ce que la jante présente des diamètres différents sur ses côtés dirigés vers le véhicule et vers l'extérieur de celui-ci.

11. Ensemble roue-pneumatique selon l'une quelconque des revendications 1 à 10, caractérisé en ce que dans la zone d'union principale (23), la surface de la jante est striée dans la direction où s'étendent les fils de corde (49) formant la garniture intérieure de renfort du bord (8) du pneu uni à cette surface, et en ce que les distances de centre à centre et la direction des gorges (48) de la striure sont les mêmes que celles des fils de corde, un nombre important de fils de corde se plaçant dans les gorges de la striure.

12. Ensemble roue-pneumatique selon l'une quelconque des revendications 1 à 11, caractérisé en ce que l'une au moins des épaulements de la jante est munie d'une surface d'appui (51) pour le roulement en cas de crevaison.

13. Procédé de fabrication d'une ensemble roue-pneumatique selon l'une quelconque des revendications 1 à 12, dans lequel des bandes préfabriquées de confection du pneu parviennent dans un tambour de confection et sont galbées sur celui-ci avec rapprochement de leurs bords, caractérisé en ce que la partie médiane des bandes de confection est pré-étirée dans sa direction longitudinale avant d'atteindre le tambour de confection.

14. Procédé selon la revendication 13, caractérisé en ce que le gommage de la corde au niveau de la zone d'union principale est mis en rapport avec un agent destiné à accroître sa dureté Shore.

15. Procédé selon la revendication 13 ou 14, caractérisé en ce que pour le galbage et/ou le chauffage, l'ensemble roue-pneumatique est attaqué directement par le fluide chauffant respectif.

16. Procédé selon la revendication 13 ou 14, caractérisé en ce qu'il est prévu, pour l'attaque indirecte par le fluide chauffant, un tuyau flexible auxiliaire mince.

17. Procédé selon l'une quelconque des revendications 13 à 16, caractérisé en ce qe la zone d'union principale est pré-chauffée.

18. Procédé selon l'une quelconque des revendications 13 à 17, caractérisé en ce que les défauts d'excentricité, de dimensions et/ou d'équilibrage sont corrigés sur l'ébauche.

**Claims**

1. Tyre unit, consisting of a pneumatic tyre (4) without a bead core, containing a reinforcing layer, and a rim (3), the beads (8, 10) of the tyre (4) and the rim (3) being connected solely by means of bonding and additional means being provided to secure the connection, these consisting firstly of undercutting (28) of the bead of the rim (10) and secondly of a ring reinforcement (29) of the bead of the tyre (8) acting in conjunction with the undercut (28), the bonding comprising a principal bonding area (23, 37) which is provided at least in the vicinity of the undercut (28), characterised in that in the principal bonding area (23, 37), which is convex along the meridional section, the tangential angle (25) to the wheel axle (1) is greater at every point than at any point (24) situated closer to the side wall of the tyre (6) and is also greater than the angle (20) at which the side wall of the tyre (6) runs freely from the single-piece rim (3) under all normal load conditions, so that only positive normal forces are transmitted to the bead of the rim from the bead of the tyre in the principal bonding area.

2. Tyre unit in accordance with Claim 1, characterised in that the bead of the tyre (8) is positioned solely on that side of the bead of the rim (10) facing the axle (1).

3. Tyre unit in accordance with Claim 1 or 2, characterised in that the tangential angle (25) mentioned above is not less than the angle (22) at which the side wall of the tyre (6) runs freely from the rim (3) under emergency conditions.

4. Tyre unit in accordance with one of Claims 1 to 3, characterised in that the principal bonding area (23) also extends into the adjacent area connected to it in the direction of the side wall of the tyre.

5. Tyre unit in accordance with one of Claims 1 to 4, characterised in that a convex supporting surface (26) is provided at the bead of the rim (10), which is located externally in relation to the principal bonding area (23) and which does not come into contact with the side wall of the tyre under normal loads.

6. Tyre unit in accordance with Claim 5, characterised in that the space between the supporting surface (26) and the side wall of the tyre (6) is filled with an elastic material (27).

7. Tyre unit in accordance with Claim 1, characterised in that the ring reinforcement (29) comprises a material which is plastic during the construction of the tyre and hardens thereafter.

8. Tyre unit in accordance with Claim 1 or 7, characterised in that the ring reinforcement (29) comprises a reinforcing ring (35) which can be inserted after the tyre has been fitted.

9. Tyre unit in accordance with Claim 8, characterised in that that part of the tyre bead (8) filling the undercut (28) forms a surface which faces the axle and is not undercut and that the reinforcing ring (35) rests on this surface.

10. Tyre unit in accordance with one of Claims 1 to 9, characterised in that the rim possesses different diameters on the sides facing towards and away from the vehicle.

11. Tyre unit in accordance with one of Claims 1 to 10, characterised in that the surface of the rim is corrugated in the principal bonding area (23) in the running direction of the cord threads (49) forming the reinforcing layer on the tyre bead (8) connected to the surface of the rim and that the centre distances and direction of the corrugated grooves (48) are identical to those of the cord threads and that a substantial number of the cord threads lies in the corrugated grooves.

12. Tyre unit in accordance with one of Claims 1 to 11, characterised in that at least one shoulder of the rim is fitted with a supporting surface (51) for puncture conditions.

13. Process for the manufacture of a tyre unit in accordance with one of Claims 1 to 12, in which prefabricated lay-up widths of the tyre are passed to a lay-up drum on which their beads are cambered and drawn together axially, characterised in that the central section of the lay-up widths is pre-stretched in a longitudinal direction before reaching the lay-up drum.

14. Process in accordance with Claim 13, characterised in that the rubber coating of the cords in the principal bonding area is combined with an agent to increase their Shore hardness.

15. Process in accordance with Claim 13 or 14, characterised in that the tyre unit is exposed directly to the relevant heating medium for the cambering and/or heating process.

16. Process in accordance with Claim 13 or 14, characterised in that a thin auxiliary tube is provided for indirect exposure to the heating medium.

17. Process in accordance with one of Claims 13 to 16, characterised in that the principal bonding area is pre-heated.

18. Process in accordance with one of Claims 13 to 17, characterised in that true running, dimensional and/or balancing defects are corrected on the tyre blank.

# Fig.1

Fig.2

6

10

29

18

33

8

16   32   31   24   30

25

Fig.3

6

26

20

17

24   23   28

25

Fig.4

22

21   24   37

8

25

2

Fig. 5

Fig. 6

Fig. 7

Fig. 8

39

42

40

41

47

44

43

46

Fig.9

48 49 49 49

Fig.10

Fig. 11

EP 0 255 539 B1

Fig.12

75   30  31  32      74   73
        29  72      33
              71         70         72      75

EP 0 255 539 B1

Fig. 13

Fig. 14